# EUROPÄISCHE PATENTANMELDUNG

(11) **EP 2 233 774 A2**
(43) Veröffentlichungstag der Anmeldung: **29.09.2010**
(21) Anmeldenummer: 10151865.2
(22) Anmeldetag: 28.01.2010
(51) Int. Cl.: F16F 9/348, F16F 9/46

(54) **Federeinheit für einen Dämpfer und zugehöriger Dämpfer für ein Fahrzeug**

(30) Priorität: 24.03.2009 DE 102009001816
(71) Anmelder: Robert Bosch GmbH, 70442 Stuttgart (DE)
(72) Erfinder: Kratzer, Dietmar, 71732 Tamm (DE)

(57) **Zusammenfassung**

Die Erfindung betrifft eine Federeinheit (10', 10") für einen Fahrzeugdämpfer mit mindestens einem Federelement (12', 12"), mit welchem zur Einstellung von Dämpferkennwerten ein Fluss eines Dämpferfluids (14) durch mindestens einen Durchflusskanal (16, 18) regelbar ist, wobei das mindestens eine Federelement (12', 12") zur Aufbiegung eine definierte Federcharakteristik aufweist, um das Dämpferfluid (14) in Durchflussrichtung passieren zu lassen, und einen korrespondierenden Fahrzeugdämpfer, der zur Einstellung von Dämpferkennwerten mindestens eine erfindungsgemäße Federeinheit (10', 10") aufweist. Erfindungsgemäß weist die Federeinheit (10', 10") eine Einstelleinrichtung (20', 20") zur Einstellung der Federcharakteristik des mindestens einen Federelements (12', 12") auf.

## Beschreibung

### Stand der Technik

Die Erfindung betrifft eine Federeinheit für einen Dämpfer nach der Gattung des unabhängigen Patentanspruchs 1 und einen korrespondierenden Dämpfer für ein Fahrzeug, der mindestens eine solche Federeinheit umfasst.

Aus dem Stand der Technik sind passive Stoßdämpferkolben bekannt, bei denen in der Regel Federeinheiten mit als Federpakete ausgeführten Federelementen eingesetzt werden, die aus mehreren Federscheiben zur Erzeugung einer bestimmten Dämpfungskraftkennlinie bestehen. Die Federsteifigkeit des Federpakets in diesen konventionellen Stoßdämpferkolben wird einmalig während der Entwicklung abgestimmt und lässt sich danach nicht mehr verstellen. Dieses Prinzip ermöglicht einen kostengünstigen und robusten Aufbau eines Dämpferkolbens bei gleichzeitig sehr guten und in der Praxis bewährten Verläufen der Dämpferkennlinien.

In der Offenlegungsschrift DE 10 2006 037 172 A1 wird ein Dämpfer für ein Fahrzeug beschrieben. Der beschriebene Dämpfer umfasst einen Dämpferzylinder, in welchem ein Kolbenstempel über eine Kolbenstange geführt ist. Zur Einstellung von Dämpferkennwerten ist der Durchfluss eines Dämpferfluids regelbar. Zu diesem Zweck sind innerhalb des Dämpferzylinders Regelungsmittel angeordnet, welche zwei unabhängige Regelkreise für eine Zugstufenperiode und eine Druckstufenperiode aufweisen, wobei die Regelungsmittel den Durchfluss des Dämpferfluids während der Druckstufenperiode in eine erste Durchflussrichtung mit ersten Verstellmitteln und während der Zugstufenperiode in eine zweite Durchflussrichtung mit zweiten Verstellmitteln regeln. Die Verstellmittel umfassen auf Federpaketen verschiebbare Schiebeeinheiten, die durch Verschieben auf den Federpaketen die Biegebalkenlänge der Federpakete und damit die Steifigkeit der Federpakete verändern. Die Verstellgrößen für die Verstellmittel können beispielsweise durch Auswerten von Signalen von Sensoreinheiten ermittelt werden. Die Sensoreinheiten sind beispielsweise als Drucksensoren, Beschleunigungssensoren und/oder Wegesensoren ausgeführt und umfassen zur Ansteuerung und Signalauswertung zugehörige Elektronikschaltungen.

### Offenbarung der Erfindung

Die erfindungsgemäße Federeinheit für einen Dämpfer, insbesondere einen Fahrzeugdämpfer, mit den Merkmalen des unabhängigen Patentanspruchs 1 hat demgegenüber den Vorteil, dass die Federeinheit eine Einstelleinrichtung zur Einstellung der Federsteifigkeit des mindestens einen Federelements aufweist. Das mindestens eine Federelement weist zur Aufbiegung eine definierte Federcharakterisitk auf, um das Dämpferfluid in Durchflussrichtung passieren zu lassen. Ein wesentlicher Vorteil ergibt sich aus der Vereinfachung der Einstellung der Federcharakterisitk bzw. der Dämpferkennwerte, da auf aufwändige bewegliche Teile, wie beispielsweise eine konventionelle Schiebermechanik mit Drehantrieb und Drehmomentübertragung verzichtet werden kann. Dadurch, dass keine beweglichen Teile erforderlich sind, kann der Aufbau der Einstelleinrichtung konstruktiv einfach ausgeführt werden. Die Nachteile von beweglichen Teilen, wie beispielsweise Massenträgheit, Verschleiß, Abrieb, Verschmutzung und dadurch hervorgerufene Fehlfunktionen werden in vorteilhafter Weise vermieden.

Ein erfindungsgemäßer Dämpfer für ein Fahrzeug umfasst zur Regelung einer Dämpferfluidströmung in mindestens einem Durchflusskanal mindestens eine erfindungsgemäße Federeinheit, um Dämpferkennwerte des Fahrzeugdämpfers einzustellen.

Durch die in den abhängigen Ansprüchen aufgeführten Maßnahmen und Weiterbildungen sind vorteilhafte Verbesserungen der im unabhängigen Patentanspruch 1 angegebenen Federeinheit für einen Dämpfer möglich.

Besonders vorteilhaft ist, dass die Einstelleinrichtung die Federsteifigkeit des mindestens einen Federelements einstellt. In vorteilhafter Weise kann durch die Einstellung der Federsteifigkeit des mindestens einen Federelements auf einfache Weise das Öffnungsverhalten des Federelementes verändert werden, so dass ein Fluss eines Dämpferfluids durch mindestens einen Durchflusskanal gezielt regelbar ist.

In Ausgestaltung der erfindungsgemäßen Federeinheit ist die Einstelleinrichtung dazu vorgesehen, durch elastische Verformung des mindestens einen Federelements dessen Federsteifigkeit zu verändern. In vorteilhafter Weise beeinflusst die Einstelleinrichtung die elastischen Eigenschaften des Federelementes, indem die Einstelleinrichtung die wirksame Länge des Federelementes, die so genannte Biegebalkenlänge des Federelementes verändert.

In weiterer Ausgestaltung der erfindungsgemäßen Federeinheit ist die Einstelleinrichtung als Piezoelement und/oder als Elektro-Hubmagnetelement und/oder als vorgespanntes Kraftspeicherelement ausgeführt. In vorteilhafter Weise ist hierdurch der Einsatz von handelsüblichen Normteilen für die Einstelleinrichtung möglich.

Besonders vorteilhaft ist, dass das mindestens eine Federelement als elastische Federscheibe ausgeführt ist. In vorteilhafter Weise kann die in Form und Herstellung einfache Federscheibe kostengünstig hergestellt werden.

Die Federscheibe weist eine im Wesentlichen mittige, einen Durchmesser aufweisende Aussparung auf, in welcher die Einstelleinrichtung angeordnet ist. Ein wesentlicher Vorteil besteht in der Nutzung von vorhandenem Bauraum zur Unterbringung der Einstellvorrichtung, wodurch die Federeinheit bauraumsparend ausgeführt ist.

In einer Ausgestaltung der erfindungsgemäßen Federeinheit verändert die Einstellvorrichtung zur Einstellung der Federsteifigkeit der Federscheibe den Durchmesser der Aussparung der Federscheibe. In einer weiteren Ausgestaltung der erfindungsgemäßen Federeinheit führt eine Aufweitung des Durchmessers der Aussparung zu einer Erhöhung der Federsteifigkeit der Federscheibe und eine Reduktion der Aufweitung des Durchmessers der Aussparung zu einer Senkung der Federsteifigkeit der Federscheibe. In vorteilhafter Weise kann die für die Einstellung der Federsteifigkeit der Federscheibe vorgesehene Einstelleinrichtung hierdurch bauraumsparend in der Aussparung der Federscheibe angeordnet sein.

In weiterer Ausgestaltung der erfindungsgemäßen Federeinheit weist die Federscheibe einen um die Aussparung verlaufenden, aufgebogenen Rand auf. In weiteren Ausgestaltung der erfindungsgemäßen Federeinheit führt eine Aufweitung des Durchmessers zu einer weiteren Aufbiegung des Randes der Federscheibe. In vorteilhafter Weise sind über kleine Positionsveränderungen des aufgebogenen Randes große Veränderungen der Federsteifigkeit der Federscheibe erzielbar.

Ausführungsbeispiele der Erfindung sind in den Zeichnungen dargestellt und werden in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt einen Querschnitt durch ein erstes Ausführungsbeispiel einer erfindungsgemäßen Federeinheit für einen Fahrzeugdämpfer, mit einer Federscheibe und einer unbetätigten Einstelleinrichtung.
Figur 3 zeigt die erfindungsgemäße Federeinheit gemäß Fig. 2, mit der Federscheibe und der betätigten Einstelleinrichtung, wobei die Betätigung der Einstelleinrichtung zu einer steifigkeitserhöhenden Wirkung bei der Federscheibe führt.
Figur 4 zeigt einen Querschnitt durch ein zweites Ausführungsbeispiel einer erfindungsgemäßen Federeinheit für einen Fahrzeugdämpfer, mit einer Federscheibe und einer unbetätigten Einstelleinrichtung, wobei eine Betätigung der Einstelleinrichtung zu einer steifigkeitssenkenden Wirkung bei der Federscheibe führt.

### Ausführungsformen der Erfindung

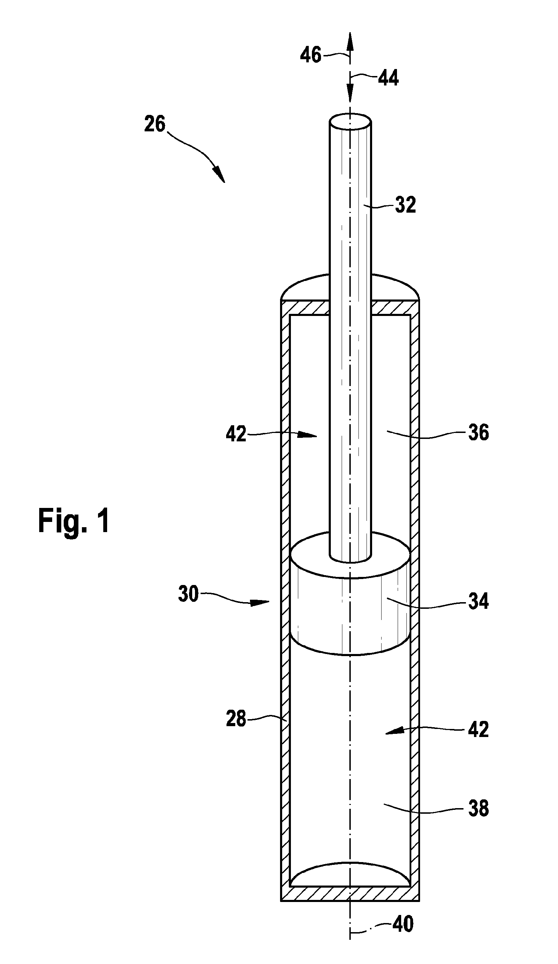

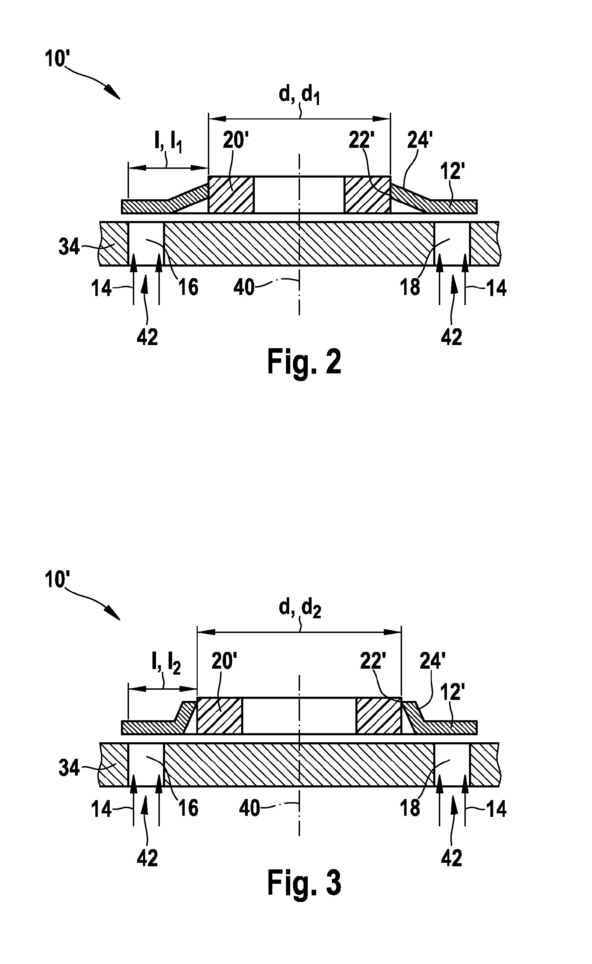

Wie aus Fig. 1 ersichtlich ist, umfasst ein erfindungsgemäßer Dämpfer 26, der vorzugsweise als Stoßdämpfer eines Fahrzeugs ausgeführt ist, einen mit einem Dämpferfluid 14 befüllten Dämpferzylinder 28, in dem eine Kolbeneinheit 30 beweglich angeordnet ist, die eine Kolbenstange 32 und einen Kolbenstempel 34 umfasst, wobei der Kolbenstempel 34 über die Kolbenstange 32 in dem Dämpferzylinder 28 geführt wird. Der Kolbenstempel 34 teilt den Dämpferzylinder 28 in eine obere Dämpferkammer 36 und in eine untere Dämpferkammer 38. Bei einer axialen, vorzugsweise in Richtung einer Hochachse 40 des Dämpfers 26 verlaufenden Bewegung der Kolbenstange 32 und damit des Kolbenstempels 34 gegenüber dem Dämpferzylinder 28 muss das Dämpferfluid 14 durch eine innerhalb des Dämpferzylinders 28 angeordnete Durchflusseinrichtung 42 fließen, die vorzugsweise zwei Durchflusskanäle 16, 18 aufweist, die in Fig. 2 bis 4 dargestellt sind. Die Durchflusseinrichtung 42 bildet bevorzugt einen geschlossenen Kreislauf. Im Betrieb beziehungsweise während einer Beanspruchung des Dämpfers 26 strömt durch die in Richtung der Hochachse 40 des Dämpfers 26 bzw. des Dämpferzylinders 28 gerichtete Bewegung der Kolbeneinheit 30 der Dämpferfluidstrom 14 in der Durchflusseinrichtung 42. Die Durchflusseinrichtung 42 umfasst mindestens eine in eine erste Durchflussrichtung 44 wirkende Zugstufe und/oder mindestens eine in eine zweite Durchflussrichtung 46 wirkende Druckstufe. Zur Einstellung von Dämpferkennwerten ist der Fluss des Dämpferfluids 14 durch mindestens einen Durchflusskanal 16, 18 mit Verstellmitteln 10', 10" gemäß Fig. 2 bis 4 regelbar. Die Verstellmittel umfassen mindestens eine Federeinheit 10', 10".

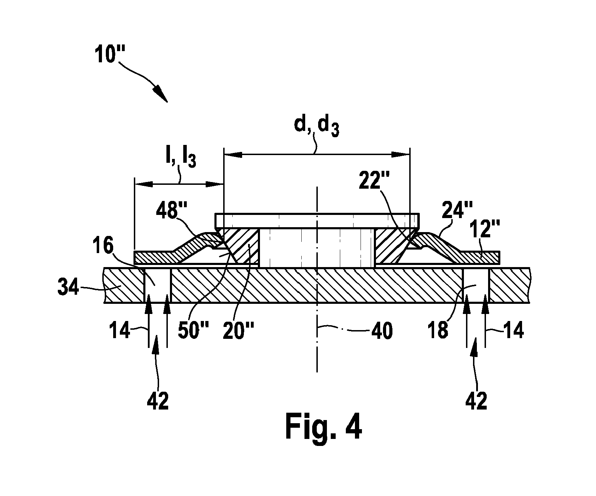

Wie aus Fig. 2 bis 4 ersichtlich, ist eine erfindungsgemäße Federeinheit 10', 10" in die zwei Durchflusskanäle 16, 18 aufweisende Durchflusseinrichtung 42 des Fahrzeugdämpfers 26 eingebracht und wird zur Einstellung von Dämpferkennwerten verwendet, wobei Fig. 2 und 3 die Federeinheit 10' in einer ersten Ausführungsform und Fig. 4 die Federeinheit 10" in einer zweiten Ausführungsform zeigen. Die Durchflusskanäle 16, 18 können beispielsweise in dem Kolbenstempel 34 angeordnet werden, welcher über die Kolbenstange 32 in dem Dämpferzylinder 28 des Fahrzeugdämpfers 26 geführt ist. Die dargestellte Federeinheit 10', 10" weist ein Federelement 12', 12" auf, mit welchem zur Einstellung von Dämpferkennwerten der Fluss des Dämpferfluids 14 durch die Durchflusskanäle 16, 18 regelbar ist. Die Durchflusskanäle 16, 18 sind im dargestellten Ausführungsbeispiel so in ein Bauteil eingebracht bzw. werden so von mehreren Bauteilen seitlich begrenzt, dass eine axiale Auflagefläche für das Federelement 12', 12" zur Verfügung gestellt wird. Das Federelement 12', 12" weist zur Aufbiegung eine definierte Federcharakteristik auf, um das Dämpferfluid 14 in die durch Pfeile angezeigte Durchflussrichtung passieren zu lassen.

Um den Fluss des Dämpferfluids 14 durch mindestens einen Durchflusskanal 16, 18 zur Einstellung von Dämpferkennwerten auf einfache Weise zu ermöglichen, weist die Federeinheit 10', 10" erfindungsgemäß eine Einstelleinrichtung 20', 20" zur Einstellung der Federcharakteristik des Federelements 12', 12" auf. In den vorliegenden Ausführungsbeispielen stellt die Einstelleinrichtung 20', 20" die Federsteifigkeit des mindestens einen Federelements 12', 12" ein.

Die Einstelleinrichtung 20', 20" ist dazu vorgesehen, durch elastische Verformung des Federelements 12', 12" dessen Federsteifigkeit zu verändern. Die Einstelleinrichtung 20', 20" beeinflusst die elastischen Eigenschaften des Federelementes 12'und 12", indem die Einstelleinrichtung 20', 20" die wirksame Länge, die so genannte Biegebalkenlänge des Federelements 12', 12" verändert. Vorzugsweise ist die Einstelleinrichtung 20', 20" als Kraftelement in Form eines Piezoelements und/oder eines Elektro-Hubmagnetelements und/oder eines vorgespannten Kraftspeicherelements ausgeführt. In den vorliegenden Ausführungsbeispielen ist die Einstelleinrichtung 20', 20" bevorzugt als Piezoelement ausgeführt, da zur Einstellung der Federsteifigkeit des Federelements 12', 12" große Kräfte bei geringen Wegen erzeugt werden müssen.

In den vorliegenden Ausführungsbeispielen gemäß Fig. 2 bis 4 ist das Federelement 12', 12" als elastische Federscheibe ausgeführt. Die Federscheibe 12', 12" weist eine im Wesentlichen mittige, einen Durchmesser d aufweisende Aussparung 22', 22" auf, in welcher die vorzugsweise als Piezoelement ausgeführte Einstelleinrichtung 20', 20" angeordnet ist. Zur Einstellung der Federsteifigkeit der Federscheibe 12', 12" verändert die Einstelleinrichtung 20', 20" den Durchmesser d der Aussparung 22', 22" und wirkt somit in axialer Richtung, wobei eine Aufweitung des Durchmessers d der Aussparung 22', 22" zu einer Erhöhung der Federsteifigkeit der Federscheibe 12', 12" und eine Reduktion der Aufweitung des Durchmessers d der Aussparung 22', 22" zu einer Senkung der Federsteifigkeit der Federscheibe 12', 12" führt.

Die Federscheibe 12', 12" weist einen um die Aussparung 22', 22" verlaufenden, aufgebogenen Rand 24', 24" auf, der auf einfache Weise realisiert werden kann. Eine Aufweitung des Durchmessers d der Aussparung 22', 22" führt zu einer weiteren Aufbiegung des Randes 24', 24" der Federscheibe 12', 12", so dass die wirksame Länge I der Federscheibe 12' und 12", die so genannte Biegebalkenlänge der Federscheibe 12', 12" verkürzt ist, wodurch die Federsteifigkeit der Federscheibe 12', 12" erhöht wird. In den vorliegenden Ausführungsbeispielen handelt es sich bei der wirksamen Länge I der Federscheibe 12', 12" um die Länge des flachen Abschnitts der Federscheibe 12', 12".

Fig. 2 zeigt die Federeinheit 10' mit der elastischen Federscheibe 12' und einer unbetätigten Einstelleinrichtung 20', so dass der Durchmesser d der Aussparung 22' der Federscheibe 12' seine ursprüngliche Größe d₁ und die Federscheibe 12' eine wirksame Länge I₁ aufweist. Die Federscheibe 12' weist eine geringere Federsteifigkeit auf und ist somit biegeweicher. Fig. 3 zeigt die Federeinheit 10' mit der elastischen Federscheibe 12' und der betätigten Einstelleinrichtung 20'. Durch elektrisch initiierte Ausdehnung der als Piezoelement ausgeführten Einstelleinrichtung 20' wird deren Umfang größer und der ursprüngliche Durchmesser d₁ der Federscheibe 12' wird auf den Durchmesser d₂ aufgeweitet. Der aufgebogene Rand 24' der Federscheibe 12' wird dadurch weiter aufgebogen bzw. steiler aufgerichtet, so dass die wirksame Länge I der Federscheibe 12', die so genannte Biegebalkenlänge der Federscheibe 12' auf die Länge I₂ verkürzt ist, wodurch die Federsteifigkeit der Federscheibe 12' erhöht wird. Bei gleicher eingeleiteter Kraft beziehungsweise Druckdifferenz zwischen Oberseite zu Unterseite des Kolbenstempels 34 wird nun ein anderer Öffnungshub des flachen Abschnitts der Federscheibe 12' realisiert. Hierdurch ergibt sich eine signifikant veränderte Charakteristik des Dämpfers 26. Die Betätigung der Einstelleinrichtung 20' führt somit zu einer steifigkeitserhöhenden Wirkung.

Wie aus Fig. 4 ersichtlich, weist die Federscheibe 12" der Federeinheit 10" im Unterschied zur ersten Ausführungsform an dem um die Aussparung 22" verlaufenden, aufgebogenen Rand 24" eine Abkragung 48" auf, die an einer Mantelfläche 50" der Einstelleinrichtung 20" anliegt. Durch diese geringfügige Umgestaltung der Federscheibe 12" kann die Wirkung der Einstelleinrichtung 20" so verändert werden, dass die Betätigung der Einstelleinrichtung 20" zu einer steifigkeitssenkenden Wirkung führt. Der Fluss des Dämpferfluids 14 kann analog zur ersten Ausführungsform durch eine Beeinflussung der elastischen Eigenschaften der Federscheibe 12" geregelt werden. Fig. 4 zeigt die unbetätigte Einstelleinrichtung 20", wobei die Aussparung 22" der Federscheibe 12" den Durchmesser d₃ aufweist. Bei unbetätigter Einstelleinrichtung 20" befindet sich der aufgebogene Rand 24" in einer steilen Stellung, so dass die wirksame Länge I der Federscheibe 12", die so genannte Biegebalkenlänge der Federscheibe 12" auf die Länge I₃ verkürzt ist, wodurch die Federsteifigkeit der Federscheibe 12" erhöht ist. Durch eine hier nicht dargestellte, elektrisch initiierte Ausdehnung der als Piezoelement ausgeführten Einstelleinrichtung 20" wird deren Umfang größer und drückt den steil aufgerichteten Rand 24" der Federscheibe 12" nach unten, indem die Abkragung 48" an der Mantelfläche 50" der Einstelleinrichtung 20" entlang nach unten gleitet. Hierdurch wird die wirksame Länge I der Federscheibe 12", die so genannte Biegebalkenlänge der Federscheibe 12" verlängert und der Durchmesser d₃ vergrößert, wodurch die Federsteifigkeit der Federscheibe 12" gesenkt wird und die Federscheibe 12" biegeweicher ist. Bei gleicher eingeleiteter Kraft beziehungsweise Druckdifferenz zwischen Oberseite zu Unterseite des Kolbenstempels 34 wird nun ein anderer Öffnungshub des flachen Abschnitts der Federscheibe 12" realisiert. Hierdurch ergibt sich eine signifikant veränderte Charakteristik des Dämpfers 26. Die Betätigung der Einstelleinrichtung 20" führt somit zu einer steifigkeitssenkenden Wirkung. Dies bietet im Falle einer Fehlfunktion Vorteile hinsichtlich einer steifen und sicherheitsbetonten Dämpfercharakteristik. Bei einem unerwünschten Ausfall der Einstelleinrichtung bleibt der aufgerichtete Rand des Federelementes in seiner steifen Stellung, wodurch die Federsteifigkeit des Federelementes erhöht und die Betriebssicherheit erhalten bleibt.

Alternativ bzw. ergänzend sind zur Einstellung der Dämpfercharakteristika abweichend gestaltete Federelemente und/oder Einstelleinrichtungen möglich, wie beispielsweise gewellte oder mit Einschnitten versehene Federelemente und/oder radial wirkende Einstelleinrichtungen.

## Patentansprüche

1. Federeinheit (10', 10") für einen Dämpfer mit mindestens einem Federelement (12', 12"), mit welchem zur Einstellung von Dämpferkennwerten ein Fluss eines Dämpferfluids (14) durch mindestens einen Durchflusskanal (16, 18) regelbar ist, wobei das mindestens eine Federelement (12', 12") zur Aufbiegung eine definierte Federcharakteristik aufweist, um das Dämpferfluid (14) in Durchflussrichtung passieren zu lassen, **gekennzeichnet durch** eine Einstelleinrichtung (20', 20") zur Einstellung der Federcharakteristik des mindestens einen Federelements (12', 12").

2. Federeinheit nach Anspruch 1, **dadurch gekennzeichnet, dass** die Einstelleinrichtung (20', 20") die Federsteifigkeit des mindestens einen Federelements (12', 12") einstellt.

3. Federeinheit nach Anspruch 1 oder 2, **dadurch gekennzeichnet, dass** die Einstelleinrichtung (20', 20") dazu vorgesehen ist, durch elastische Verformung des mindestens einen Federelements (12', 12") dessen Federsteifigkeit zu verändern.

4. Federeinheit nach einem der Ansprüche 1 bis 3, **dadurch gekennzeichnet, dass** die Einstelleinrichtung (20', 20") als Piezoelement und/oder als Elektro-Hubmagnetelement und/oder als vorgespanntes Kraftspeicherelement ausgeführt ist.

5. Federeinheit nach einem der Ansprüche 1 bis 4, **dadurch gekennzeichnet, dass** das mindestens eine Federelement (12', 12") als elastische Federscheibe ausgeführt ist.

6. Federeinheit nach einem der Ansprüche 1 bis 5, **dadurch gekennzeichnet, dass** die Federscheibe (12', 12") eine im Wesentlichen mittige, einen Durchmesser (d) aufweisende Aussparung (22', 22") aufweist, in welcher die Einstelleinrichtung (20', 20") angeordnet ist.

7. Federeinheit nach einem der Ansprüche 1 bis 6, **dadurch gekennzeichnet, dass** die Einstelleinrichtung (20', 20") zur Einstellung der Federsteifigkeit der Federscheibe (12', 12") den Durchmesser (d) der Aussparung (22', 22") verändert.

8. Federeinheit nach einem der Ansprüche 1 bis 7, **dadurch gekennzeichnet, dass** eine Aufweitung des Durchmessers (d) der Aussparung (22', 22") zu einer Erhöhung der Federsteifigkeit der Federscheibe (12', 12") und eine Reduktion der Aufweitung des Durchmessers (d) der Aussparung (22', 22") zu einer Senkung der Federsteifigkeit der Federscheibe (12', 12") führt.

9. Federeinheit nach einem der Ansprüche 1 bis 8, **dadurch gekennzeichnet, dass** die Federscheibe (12', 12") einen um die Aussparung (22', 22") verlaufenden, aufgebogenen Rand (24', 24") aufweist.

10. Federeinheit nach einem der Ansprüche 1 bis 9, **dadurch gekennzeichnet, dass** eine Aufweitung des Durchmessers (d) zu einer weiteren Aufbiegung des Randes (24', 24") der Federscheibe (12', 12") führt.

11. Dämpfer für ein Fahrzeug, wobei zur Einstellung von Dämpferkennwerten der Fluss eines Dämpferfluids (14) durch mindestens einen Durchflusskanal (16, 18) mit Verstellmitteln (10', 10") regelbar ist, **dadurch gekennzeichnet, dass** die Verstellmittel mindestens eine Federeinheit (10', 10") nach einem der Ansprüche 1 bis 10 umfassen.
